# EUROPEAN PATENT APPLICATION

(11) **EP 3 751 587 A1**
(43) Date of publication of application: **16.12.2020**
(21) Application number: 19382495.0
(22) Date of filing: 13.06.2019
(51) Int. Cl.: H01F 7/122, H01F 7/14, H01F 7/06, F16K 31/06

(54) **ELECTROMAGNETIC ACTUATOR AND GAS SHUT-OFF VALVE COMPRISING SAID ELECTROMAGNETIC ACTUATOR**

(71) Applicant: Copreci, S.Coop., 20550 Aretxabaleta (ES)
(72) Inventor: QUEREJETA ANDUEZA, Félix, 64700 Hendaye (FR)
(74) Representative: Igartua, Ismael

(57) **Abstract**

Electromagnetic actuator comprising an electromagnet (10), a swinging arm (30) with a first end (31) and a second end (32), and a closure member (40) coupled to the first end (31), the swinging arm (30) swinging between a closed position and an open position, the swinging arm (30) transitioning to the open position when the electromagnet (10) is energized. The swinging arm (30) is made of ferromagnetic material and swings with respect to a pivoting area (20) arranged at the second end (32), with the pivoting area (20) being supported on the electromagnet (10) in the closed position, and an additional segment of the swinging arm (30) also being supported on the electromagnet (10), attracted by the electromagnet (10) in the open position.

## Description

### TECHNICAL FIELD

The present invention relates to electromagnetic actuators and gas shut-off valves comprising said electromagnetic actuators.

### PRIOR ART

Electromagnetic actuators suitable for opening and closing gas passage openings in gas shut-off valves, wherein said gas passage openings communicate at least one gas inlet with at least one gas outlet of said gas shut-off valves, are known. These electromagnetic actuators are electrically powered and comprise an electromagnet and a closure member, the closure member closing the gas passage in the passage opening when the electromagnet is not energized, and opening the gas passage in the passage opening when the electromagnet is energized and moves the closure member.

EP2369234A2 describes an electromagnetic actuator suitable for opening and closing a gas passage opening of a gas shut-off valve. The electromagnetic actuator comprises an electromagnet, a swinging arm with a first end and a second end, and a closure member configured for closing the passage opening, the closure member being coupled to the first end of the swinging arm, the swinging arm swinging between a closed position, in which the closure member closes the gas passage in the passage opening, and an open position, in which the gas passage in the passage opening is open, the swinging arm transitioning to the open position when the electromagnet is energized.

### DISCLOSURE OF THE INVENTION

The object of the invention is to provide an electromagnetic actuator and a gas shut-off valve comprising said electromagnetic actuator, as defined in the claims.

A first aspect of the invention relates to an electromagnetic actuator suitable for opening and closing a gas passage opening of a gas shut-off valve. The electromagnetic actuator comprises an electromagnet, a swinging arm with a first end and a second end, and a closure member configured for closing the passage opening, the closure member being coupled to the first end of the swinging arm, the swinging arm swinging between a closed position, in which the closure member closes the gas passage in the passage opening, and an open position, in which the gas passage in the passage opening is open, the swinging arm transitioning to the open position when the electromagnet is energized.

The swinging arm is made of ferromagnetic material and swings with respect to a pivoting area arranged at the second end of the swinging arm, such that in the closed position the pivoting area is supported on the electromagnet, and in the open position an additional segment of the swinging arm is also supported on the electromagnet, attracted by the electromagnet.

The fact that a pivoting area of the second end of the swinging arm swings directly on to the electromagnet and that at least one additional segment of the swinging arm is supported on the electromagnet when the swinging member is in the open position, as a result of the swinging arm being made of ferromagnetic material and attracted by the magnetic field produced by the electromagnet, means that the space required by the electromagnetic actuator is smaller, since the second end of the swinging arm is continuously supported on the same electromagnet, allowing the swinging arm to swing onto the electromagnet. This has the advantage of allowing the electromagnetic actuator to be made with a smaller number of parts and with a shorter swinging arm, whereby a constructively less complex and dimensionally more compact solution is obtained.

A second aspect of the invention relates to a gas shut-off valve comprising at least one electromagnetic actuator such as the one described above. The fact that the electromagnetic actuator has a smaller number of parts and is dimensionally more compact means that a more compact gas shut-off valve can be made with a lower cost.

These and other advantages and features of the invention will become evident in view of the drawings and the detailed description of the invention.

### DESCRIPTION OF THE DRAWINGS

Figure 1 shows a longitudinal section view of an embodiment of the electromagnetic actuator of the invention, with the swinging arm in the closed position.
Figure 2 shows a perspective view of the electromagnet of the electromagnetic actuator of Figure 1.
Figure 3 shows a perspective view of the core of the electromagnet of Figure 2.
Figure 4 shows a perspective view of the swinging arm of the electromagnetic actuator of Figure 1.
Figure 5 shows a perspective view of the coupling means of the electromagnetic actuator of Figure 1.
Figure 6 shows a perspective view of the swinging arm of Figure 4 and the coupling means of Figure 5 mounted together.
Figure 7 shows a perspective view of an embodiment of the gas shut-off valve of the invention, comprising the electromagnetic actuator of Figure 1.
Figure 8A shows a longitudinal section view of the gas shut-off valve of Figure 7, with the swinging arm of the electromagnetic actuator in the open position.
Figure 8B shows a longitudinal section view of the gas shut-off valve of Figure 7, with the swinging arm of the electromagnetic actuator in the closed position.
Figure 9A shows a perspective view of a second embodiment of the core.
Figure 9B shows a perspective view of an assembly formed by the core of Figure 9A and a permanent magnet attached thereto.
Figure 10 shows a perspective view of a second embodiment of the electromagnetic actuator comprising the assembly of Figure 9B, mounted on a printed circuit board.
Figure 11 shows a diagram depicting the hysteresis cycle of the permanent magnet of Figure 9B, and a diagram with a sequence for powering the coil of the electromagnet of the electromagnetic actuator of Figure 10, to cause the swinging arm of the electromagnetic actuator to swing between the open position and the closed position.
Figure 12 shows a plan view of another embodiment of the assembly of the electromagnetic actuator and the printed circuit board, with electronic components mounted on the printed circuit board.
Figure 13 shows a perspective view of a second embodiment of the gas shut-off valve of the invention, comprising one gas inlet and three gas outlets.
Figure 14 shows a plan view of an assembly of three electromagnetic actuators mounted on a printed circuit board of the gas shut-off valve of Figure 13, two of the electromagnetic actuators being like the one shown in Figure 1 and one electromagnetic actuator being like the one shown in Figure 10.
Figure 15 shows a bottom plan view of the valve body of the gas shut-off valve of Figure 13.
Figure 16 shows a diagram of two gas appliances sharing the gas shut-off valve of Figure 13.

### DETAILED DISCLOSURE OF THE INVENTION

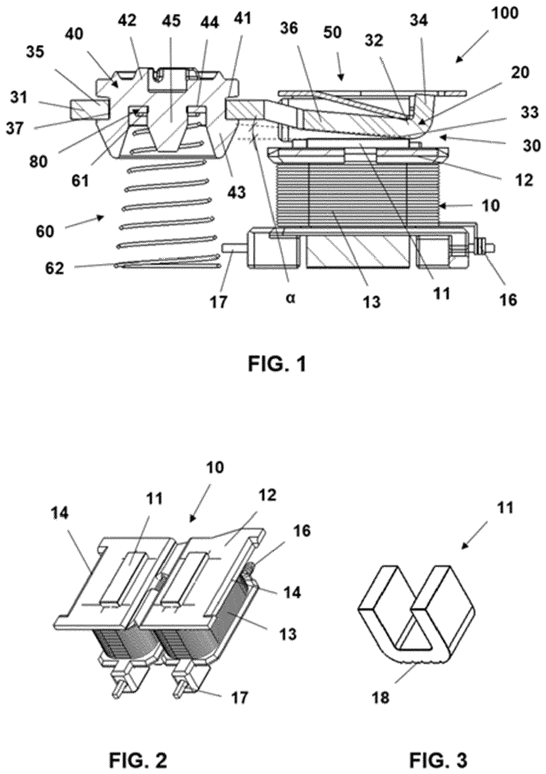

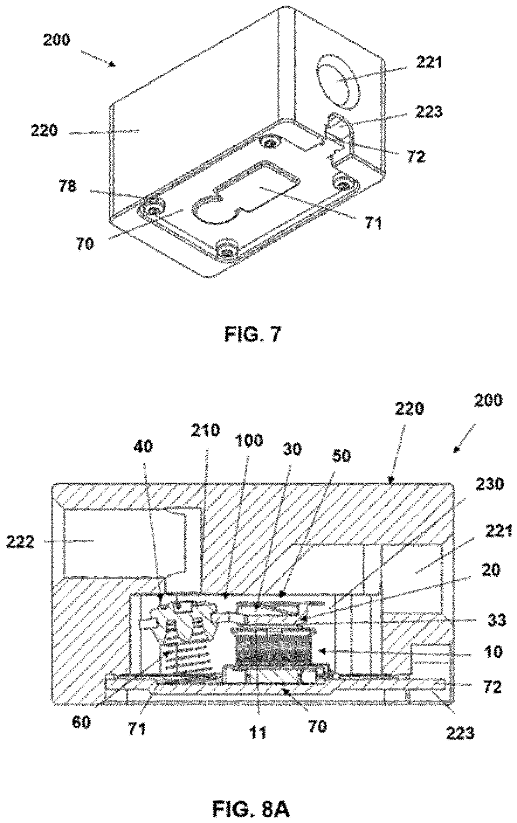

A first aspect of the invention relates to an electromagnetic actuator 100 suitable for opening and closing a gas passage opening 210 of a gas shut-off valve 200. Figures 1 to 6 show an embodiment of the electromagnetic actuator 100, and Figures 7 to 8A-8B show an embodiment of the gas shut-off valve 200 comprising the electromagnetic actuator 100 shown in Figures 1 to 6.

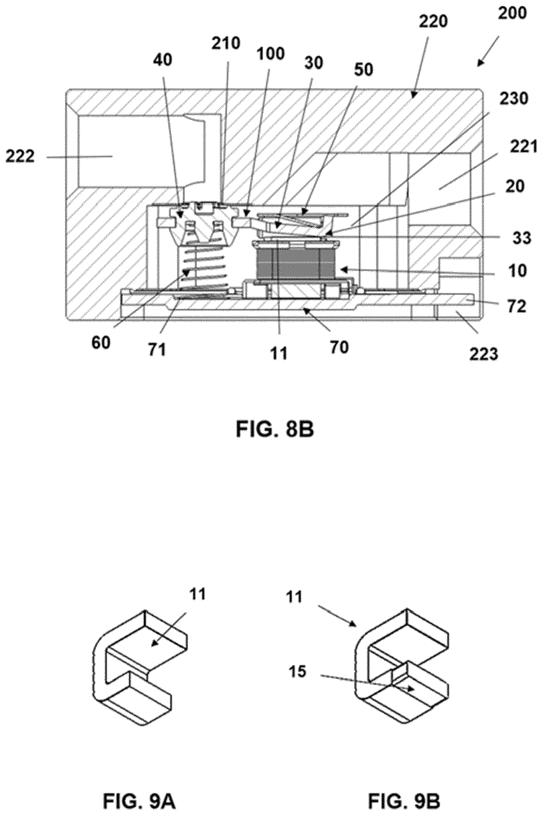

The electromagnetic actuator 100 comprises an electromagnet 10, a swinging arm 30 comprising a first end 31 and a second end 32, and a closure member 40 which is configured for closing the passage opening 210 of the gas shut-off valve 200 that is shown in Figure 8.

The closure member 40, which is a sealing element, manufactured in this embodiment with an elastomer material, is coupled to the first end 31 of the swinging arm 30. The swinging arm 30 swings between a closed position, in which the closure member 40 closes the gas passage in the passage opening 210, and an open position, in which the gas passage in the passage opening 210 is open, the swinging arm 30 transitioning to the open position when the electromagnet 10 is energized generating a magnetic field. The swinging arm 30 is made of ferromagnetic material, for example, martensitic carbon steel AISI 430F, and swings with respect to a pivoting area 20 arranged at the second end 32 of the swinging arm 30, such that in the closed position the pivoting area 20 is supported on the electromagnet 10, and in the open position an additional segment of the swinging arm 30 is also supported on the electromagnet 10, attracted by the magnetic field generated by the electromagnet 10.

In this embodiment, the electromagnet 10 of the electromagnetic actuator 100 comprises, as shown in Figures 2 and 3, a U-shaped core 11 made of ferromagnetic material, a reel 12, which is a plastic part with an upper plate and a lower plate attached to one another by a central body that has two openings going through same, and a coil 13 which is wound around the central body of the reel 12, such that said coil 13 is supported on the reel 12. The reel 12 is inserted in the two arms of the core 11 by means of the two openings, with the coil 13 thereby surrounding the core 11. The reel 12 comprises in the lower plate two projections at each end, there being inserted into said projections two connection pins 16 inserted into each of the projections of one end of the lower plate, and two fixing pins 17 inserted into each of the projections of the other end of the lower plate. The connection pins 16 and fixing pins 17 are made of an electrically conductive material. The two ends of the coil 13 are connected to the two connection pins 16 by means that are already known in the state of the art, the coil 13 being connected with the outside of the gas shut-off valve 200 through the connection pins 16, and the fixing pins 17 being fixed to the gas shut-off valve 200 in the manner that will be described below. The electromagnet 10 can therefore be energized from the outside of the gas shut-off valve 200. In this embodiment of the electromagnetic actuator 100, the second end 32 of the swinging arm 30 is directly supported on the core 11.

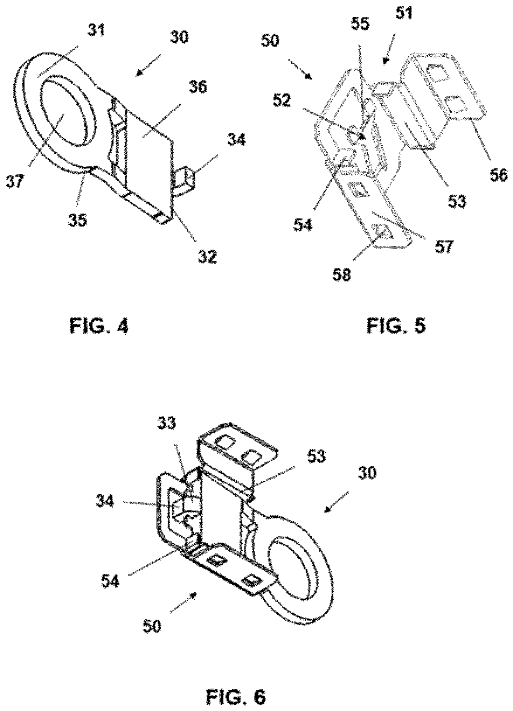

The swinging arm 30 is an elongated plate comprising, as shown in Figures 1 and 4, a substantially circular and horizontal first portion 35 comprising the first end 31 and a substantially rectangular second portion 36 attached to the first portion 35, which is inclined at an angle α with respect to the first portion 35, said second portion 36 comprising the second end 32. In this embodiment of the electromagnetic actuator 100, the second end 32 of the swinging arm 30 is supported on the two arms of the core 11, such that when the swinging arm 30 is in the closed position, the second portion 36 of the swinging arm 30 forms an angle of inclination α with the upper surface of the two arms of the core 11. When the swinging arm 30 is in the open position, the second portion 36 is also supported on the upper surface of the two arms of the core 11. The pivoting area 20 of the swinging arm 30 arranged at the second end 32 comprises a support surface 33, this support surface 33 being partially circular, comprising an axis of rotation which allows the swinging arm 30 to swing between the closed position and the open position. This support surface 33 is the support surface in the two arms of the core 11.

The pivoting area 20 of the swinging arm 30 comprises at the second end 32 a projection 34 which is, in this embodiment, arranged orthogonal to the second portion 36, protruding in the direction opposite the support surface 33. As shown in Figures 4 and 6, this projection 34 only protrudes from the center of the end of the second portion 36, with the support surface 33 being formed in the lower rear portion of the projection 34.

In this embodiment, the electromagnetic actuator 100 also comprises, as shown in Figures 5 and 6, coupling means 50 which are configured for coupling the swinging arm 20 to the electromagnet 10, allowing the swinging arm 30 to swing freely. In this embodiment, the coupling means 50 are formed by a bent and perforated non-ferromagnetic metal sheet, for example, manufactured in austenitic carbon steel AISI 301 or AISI 304, said coupling means 50 comprising pressure means 52 holding the pivoting area 20 of the swinging arm 30 against the electromagnet 10, allowing the swinging arm 30 to swing in the pivoting area 20 with respect to the electromagnet 10. The pressure means 52 comprise a cut-out elastic plate 55 protruding downwardly from a first plate of the coupling means 50 once arranged in a horizontal position on the swinging arm 30. When the coupling means 50 are coupled to the electromagnet 10 encircling the swinging arm 30, a free end 55 of the pressure means 52 in the form of a hook encircles the projection 34 of the swinging arm 30 at a pivoting point, said projection 34 pushing against the upper surface of the two arms of the core 11 on the support surface 33, allowing the swinging arm 30 to swing in the pivoting area 20 with respect to the electromagnet 10.

In this embodiment of the electromagnetic actuator 100, the coupling means 50 also comprise holding means 51 which hold the second portion 36 of the swinging arm 30 and prevent the linear movement thereof with respect to the electromagnet 10. These holding means 51 comprise side stops 53, which are side walls protruding from the upper plate of the coupling means 50 on each side. The holding means 51 also comprise front stops 54, which are cutouts, protruding downwards at one end of the side stops 53 and into the coupling means 50. When the coupling means 50 are coupled to the electromagnet 10 encircling the swinging arm 30, the side stops 53 abut with the sides of the second portion 36 of the swinging arm 30, and the front stops 54 abut with the rear end of the second end 32 of the swinging arm 30, these side stops 53 and front stops 54 preventing the lateral and longitudinal movement of the swinging arm 30 with respect to the electromagnet 10, with the pressure means 52 thereby forcing the swinging arm 30 to swing in the pivoting area 20 with respect to the electromagnet 10.

In this embodiment of the electromagnetic actuator 100, the coupling means 50 are fixed to the electromagnet 10 for coupling the swinging arm 20 to the electromagnet 10. To that end, the coupling means 50 comprise side plates 56 and 57 which are bent walls after the bent walls forming the side stops 53, the side plates 56 and 57 being orthogonal to the first plate of the coupling means 50. These side plates 56 and 57 each comprises two elastic flanges 58 formed as a projecting cutout. When the swinging arm 30 is coupled to the electromagnet 10, with the coupling means 50 being arranged encircling the swinging arm 30, the elastic flanges 58 clip onto the side edges 14 of the electromagnet 10, fixing the coupling means 50, said side edges 14 being arranged, in this embodiment, in each of the upper side edges of the reel 12.

The swinging arm 30 comprises at the first end 31 an opening 37 going through the plate forming the swinging arm 30. In turn, the closure member 40, which in this embodiment is an element manufactured with elastomer, has a substantially cylindrical shape with an outer diameter greater than the diameter of the opening 37, and comprises a perimetral groove 41 at about half the height thereof. To couple the closure member 40 to the first end 31, said closure member is introduced in the opening 37 by pressure, and the edge of the opening 37, i.e., the thickness of the plate forming the swinging arm 30, fits in the groove 41. However, the perimetral groove 41 has sufficient height for the edge of the opening 37 to fit in the perimetral groove 41 with play, such that the closure member 40 can pivot freely when the electromagnetic actuator 100 closes the gas passage opening 210 of the gas shut-off valve 200, as shown in Figure 8B, and adapt to said passage opening 210 despite irregularities in the construction of the shut-off valve 200, such as height differences.

The electromagnetic actuator 100 also comprises a spring 60 which helps the swinging arm 30 to swing to the closed position and the closure member 40 to close the gas passage in the passage opening 210 of the gas shut-off valve 200. The spring 60 comprises a first end 61 which is supported on the closure member 40 being coupled thereto, and a second end 62, opposite the first end 61, which is supported on a surface of the gas shut-off valve 200, as will be described below. When the electromagnet 10 is energized, the swinging arm 30 transitions to the open position and the spring 60 is compressed, exerting an elastic force on the closure member 40 which generates a torque in the swinging arm 30 around the pivoting area 20.

In this embodiment shown in Figure 1, the electromagnetic actuator 100 comprises a washer 80. The closure member 40 comprises a closure end 42 which, when the closure member 40 is coupled in the opening 37 of the first end 31 of the swinging arm 30, protrudes in the upper portion of said swinging arm 30, and a guiding end 43 protruding in the lower portion of the swinging arm 30. The guiding end 43 comprises an inner housing 44 open to the outside of the closure member 40 in the lower portion thereof. There protrudes in said housing 44 a protuberance 45 arranged centered in the housing 44, the washer 80 being arranged at the bottom of the housing 44 surrounding the protuberance 45, and said washer 80 is fixed without play in the housing 44, the outer edges of the washer 80 being supported on the side walls of the housing 44. The first end 61 of the spring 60 is supported on the washer 80 and arranged surrounding the protuberance 45.

A second aspect of the invention relates to a gas shut-off valve 200 comprising the electromagnetic actuator 100 described above, as shown in Figure 7. Figures 8A and 8B show a longitudinal section view of the gas shut-off valve 200 of Figure 7, with the swinging arm of the electromagnetic actuator in the open position and in the closed position, respectively. In this embodiment, the shut-off valve 200 comprises a box-shaped valve body 220 open in the lower portion thereof. Said valve body 220 comprises a gas inlet 221 and a gas outlet 222, said inlet 221 and said outlet 222 being communicated through the gas passage opening 210. The shut-off valve 200 also comprises a printed circuit board 70 which is arranged in the shut-off valve 200 like a closure wall that can be removed from said shut-off valve 200, with screws 78 being used in this embodiment for the fixing thereof. The printed circuit board 70 closes the lower portion of the valve body 220, the electromagnetic actuator 100 being fixed to the printed circuit board 70, leaving an open space 223 between the valve body 220 and the printed circuit board 70 which is located, in this embodiment, on one side of the shut-off valve 200 below the gas inlet 221. A cavity 230 is thereby created inside the shut-off valve 200, arranged between the gas inlet 221 and the gas outlet 222, in which the electromagnetic actuator 100 is arranged.

In this embodiment, the printed circuit board 70 comprises a metal base, preferably an aluminum plate, which serves for closing the valve body 220 of the gas shut-off valve 200, in accordance with gas valve regulations in force. Said printed circuit board 70 comprises in its central portion an embedded area 71 in which the electromagnet 10 of the electromagnetic actuator 100 is fixed. The printed circuit board 70 comprises at one end a projection which is an electric connection area 72. When the printed circuit board 70 is mounted in the shut-off valve 200, this connection area 72 is arranged in the open space 223, such that the connection area 72 is accessible from the outside. The printed circuit board 70 also comprises connection means which are, in this embodiment, copper tracks that extend from the connection area 72 and will be described below.

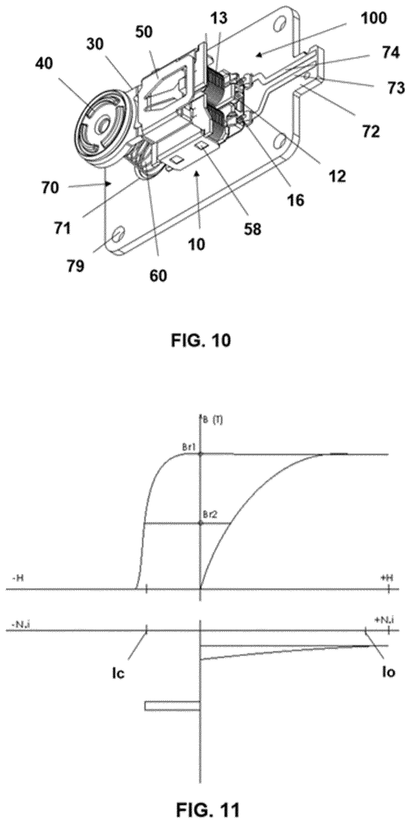

Figure 10 shows a perspective view of a second embodiment of the electromagnetic actuator 100 mounted on a printed circuit board 70, and Figures 9A and 9B show a perspective view of a second embodiment of the core 11 made of ferromagnetic material, and of an assembly formed by said core and a permanent magnet 15 attached thereto. In this embodiment, this core 11 has a U shape with one of the two arms cut short. In this embodiment, the permanent magnet 15 is an AINiCo (aluminum-nickel-cobalt) magnet, although in other embodiments it can be a magnet manufactured with rare earths. The permanent magnet 15 is arranged at the end of the shorter arm of the core 11, such that both arms are therefore at the same height, with the second portion 36 of the swinging arm 30 being supported, in this embodiment, on the upper surface of the two arms of the core 11, and therefore on the permanent magnet 15, when the swinging arm 30 is in the open position.

Figure 11 shows a diagram depicting the hysteresis cycle of the permanent magnet 15 of Figure 9B, and a diagram with a sequence for powering the coil 13 of the electromagnet 10 of the electromagnetic actuator 100 of Figure 10, to cause the swinging arm 30 of the electromagnetic actuator 100 to swing between the open position and the closed position. The permanent magnet 15 has high remanence B, which is the capacity of a material to retain the magnetism induced therein, i.e., the magnetization persisting in a permanent magnet after the external magnetic field has been removed. Furthermore, said permanent magnet 15 has low coercive force H, which is the magnetic field intensity that must be applied to that material to reduce its magnetism, after the material has been magnetized to saturation.

The electromagnetic actuator 100 of Figure 10 comprises an electromagnet 10 comprising the assembly formed by the core 11 and the permanent magnet 15 with the features described above. Furthermore, this electromagnetic actuator 100 is fixed to a printed circuit board 70 in the embedded area 71, said printed circuit board 70 comprising four openings 79 which allow the passage of screws 78 for attachment thereof with the valve body 220 of the shut-off valve 200. The printed circuit board 70 further comprises connection means 73 and 74 which are copper tracks extending from the connection area, and therefore accessible from the outside of the shut-off valve 200. The electromagnet 10 is fixed to the printed circuit board 70 as if it were an electronic component, being soldered by means of an SMD system, i.e., a surface mount treatment, on the printed circuit board 70. To that end, the lower portion of the reel 12 and the lower portion of the core 11, comprising a plurality of grooves throughout the entire surface thereof, are supported on the embedded area 71 of the printed circuit board 70. Next, and with the SMD system, the fixing pins 17 and the grooves of the lower portion of the core 11 are welded to the embedded area 71, and the connection pins 16 are welded to the connection means 73 and 74. Making holes or introducing flanges through openings in the printed circuit board 70 to make connections is therefore not required. The electromagnet 10 can therefore be energized from outside the gas shut-off valve 200 with an external power source.

Following the diagram of the sequence for powering the coil 13 of the electromagnet 10 of the electromagnetic actuator 100 of Figure 10, linking the number of amperes-turn N.i to time T, it can be seen that a bistable electromagnetic actuator 100 is obtained, in that if a current pulse lo, for example a positive, opening current pulse, is supplied to the electromagnet 10, this current that passes through the coil 13 N turns causes a momentary magnetic field which, with the permanent magnet 15 having high remanence B, generates a magnetic field Br1 in said permanent magnet 15 that persists. This magnetic field Br1 allows attracting the swinging arm 30 and keeping it close against the electromagnet 10 in a stable open position. Given that the permanent magnet 15 is made of a material with low coercive force H, if a closing current pulse Ic, in this example a negative current pulse, is supplied to electromagnet 10, said closing pulse Ic being smaller than the opening pulse lo is sufficient to reduce the magnetic field thereof to a value Br2, without reaching zero, so that the residual magnetic field of the permanent magnet 15 is not capable of retaining the swinging arm 30 in the open position, and so that the swinging arm 30 swings to a stable closed position with the help of the spring 60.

Externally, the electromagnet 10 of Figure 2, which requires constant current to keep the swinging arm 30 of the electromagnetic actuator 100 in the open position, is not distinguished from the electromagnet 10 of Figure 10, which only requires current pulses for the swinging arm 30 of the electromagnetic actuator 100 to swing between the open position and the closed position. In the electromagnet 10 of the bistable electromagnetic actuator 100 of Figure 10, the permanent magnet 15 can be magnetized before the placement thereof in the reel 12 to help in the mounting process, or can be inserted into the reel 12 once the core 11 has been inserted.

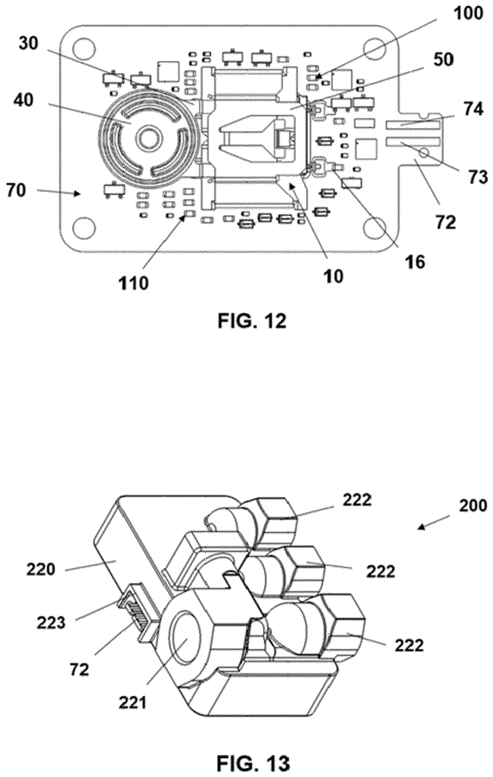

Figure 12 shows a plan view of another embodiment of the assembly of the electromagnetic actuator 100 and the printed circuit board 70, with electronic components 110 mounted on the printed circuit board 70. Electronic components 110 which may have any configuration can be fixed in this printed circuit board 70, said electronic components 110 therefore being arranged in the cavity 230 or gas chamber of the gas shut-off valve 200.

Gas appliances comprising a control unit which is electrically connected on one side with a power supply and electrically connected on another side with a gas shut-off valve, controlling the electromagnetic actuator comprised in said gas shut-off valve, are known. The gas appliance performs at the same time a series of functions such as, for example, controlling temperature sensors, ignition units, etc. which are directly connected to the control unit. If the electronic components 110 configure a control unit and are fixed to the printed circuit board 70, said control unit is arranged inside the gas shut-off valve 200. Given that the printed circuit board 70 has the connection area 72, both the connection with external electrical power supply and connection with external control devices are done through said connection area 72 by means of the connection means that are arranged in the printed circuit board 70. The electronic components 110 are welded by means of an SMD system, i.e., a surface mount treatment, on the printed circuit board 70.

Figure 13 shows a perspective view of a second embodiment of the gas shut-off valve 200 comprising a gas inlet 221 and three gas outlets 222. Like in the first embodiment of the shut-off valve 200, said shut-off valve 200 comprises a valve body 220 and a printed circuit board 70 forming a closure wall of the shut-off valve 200. Once the printed circuit board 70 is mounted, an open space 223 is generated in which the connection area 72 of the printed circuit board 70 is arranged.

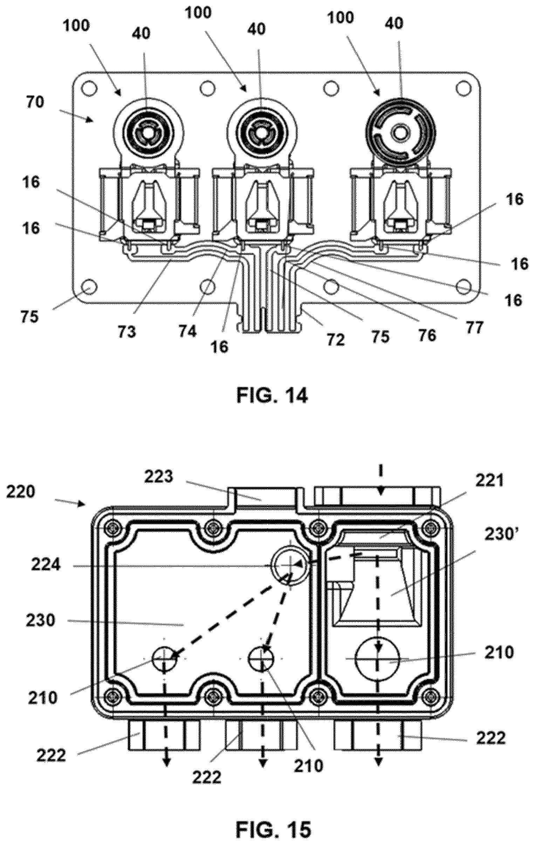

Figure 14 shows a plan view of the printed circuit board 70 of the shut-off valve 200 of Figure 13, in which three electromagnetic actuators 100 are fixed. Two of said electromagnetic actuators 100, i.e., the first and second from the left, are like the one shown in Figure 1, and the electromagnetic actuator 100 on the right is a bistable actuator like the one shown in Figure 10, with the actuator furthermore being distinguished by having a closure member 40 with larger dimensions. The printed circuit board 70 comprises connection means 73, 74, 75, 76, and 77 extending in the printed circuit board from the connection area 72, the electromagnetic actuators 100 being electrically connected to the connection means 73, 74, 75, 76, and 77 through the connection pins 16. Figure 15 shows a bottom plan view of the valve body 220 of the gas shut-off valve 200 of Figure 13. When the gas shut-off valve 200 is closed with the printed circuit board 70, two cavities or gas chambers 230 and 230' are formed. The electromagnetic actuators 100 with continuous electrical power supply to keep the swinging arm 30 in the open position are arranged in cavity 230, and the bistable electromagnetic actuator 100 is arranged in cavity 230'. Therefore, cavity 230 comprises two gas passage openings 210 between the gas inlet 221 and the two gas outlets 222, and cavity 230' comprises a single gas passage opening 210 with larger dimensions than the other two gas passage openings 210. Furthermore, the valve body 220 comprises an intermediate gas passage opening 224 which allows gas flow from the gas inlet 221 and the cavity 230. The gas flow from the gas inlet 221 to the different gas outlets 222 is defined with the arrows drawn with a discontinuous line.

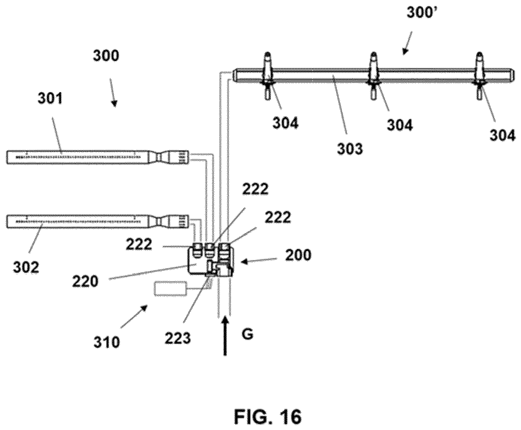

Figure 16 shows a diagram of two gas appliances 300 and 300' sharing the gas shut-off valve 200 of Figure 13. In this embodiment, the gas appliance 300 is a gas oven comprising a broil burner 301 and a bake burner 302. Each of these burners 301 and 301 is supplied with gas from the gas outlets 222 of the shut-off valve 200 which are in fluid communication with the cavity 230 in which the two electromagnetic actuators 100 electrically powered in a continuous manner in the open position are arranged. Furthermore, in this embodiment the gas appliance 300' is a gas cooktop comprising a gas distributor 303 which is in fluid connection with three gas taps 304, said gas taps 304 allowing the manual regulation of gas flow to three gas burners (not depicted). The gas distributor 303 is in fluid connection with the gas outlet 222 of the gas shut-off valve 200 which is in fluid communication with the cavity 230' in which the bistable electromagnetic actuator 100 is arranged.

In this embodiment of the gas appliances 300 and 300', the shut-off valve 200 has the gas inlet 221 in fluid connection with a gas supply source G, and an external control unit 310 is electrically connected with the printed circuit board 70 through the open space 223. The gas cooktop 300' is in fluid connection with a larger gas flow outlet through the intermediate passage opening 224 because the gas consumption in said gas cooktop 300' is greater than in the gas oven 300, and this entails a larger dimension of the closure member 40.

In this embodiment of the gas appliances 300 and 300', the electromagnetic actuators 100 of the gas oven 300 are NC (normally closed) type actuators, requiring said electromagnetic actuators 100 to be opened and closed fewer times. Furthermore, the electromagnetic actuator 100 of the gas cooktop 300 is bistable due, among other things, to the regulatory requirements in certain countries in terms of the impossibility of jointly operating a gas oven and a gas cooktop when pyrolysis is to be performed in the gas oven, or when there is a child lock function, in which case the control unit locks the gas cooktop when required.

## Claims

1. Electromagnetic actuator suitable for opening and closing a gas passage opening (210) of a gas shut-off valve (200), the electromagnetic actuator (100) comprising an electromagnet (10), a swinging arm (30) with a first end (31) and a second end (32), and a closure member (40) configured for closing the passage opening (210), the closure member (40) being coupled to the first end (31) of the swinging arm (30), the swinging arm (30) swinging between a closed position, in which the closure member (40) closes the gas passage in the passage opening (210), and an open position, in which the gas passage in the passage opening (210) is open, the swinging arm (30) transitioning to the open position when the electromagnet (10) is energized, **characterized in that** the swinging arm (30) is made of ferromagnetic material and swings with respect to a pivoting area (20) arranged at the second end (32) of the swinging arm (30), such that in the closed position the pivoting area (20) is supported on the electromagnet (10), and in the open position an additional segment of the swinging arm (30) is also supported on the electromagnet (10), attracted by the electromagnet (10).

2. Electromagnetic actuator according to claim 1, wherein the electromagnet (10) comprises a core (11) made of ferromagnetic material, and a coil (13) which surrounds the core (11) and is electrically connected with the outside of the shut-off valve (200), the second end (32) of the swinging arm (30) being supported on the core (11).

3. Electromagnetic actuator according to claim 1 or 2, wherein the pivoting area (20) of the swinging arm (30) comprises a support surface (33), with the support surface (33) being in contact with the electromagnet (10).

4. Electromagnetic actuator according to any of claims 1 to 3, comprising coupling means (50) comprising pressure means (52) holding the pivoting area (20) of the swinging arm (30) against the electromagnet (10), allowing the swinging arm (30) to swing with respect to the pivoting area (20).

5. Electromagnetic actuator according to claim 4, wherein the pivoting area (20) of the swinging arm (30) comprises a projection (34), the pressure means (52) comprising an elastic plate (55) which pushes the projection (34) against the electromagnet (10), with the swinging arm (30) swinging in the pivoting area (20) with respect to the electromagnet (10).

6. Electromagnetic actuator according to claim 4 or 5, wherein the coupling means (50) comprise holding means (51) which hold the second end (32) of the swinging arm (30) and prevent the linear movement thereof with respect to the electromagnet (10).

7. Electromagnetic actuator according to claim 6, wherein the holding means (51) of the coupling means (50) comprise side stops (53) and front stops (54) abutting with the swinging arm (30), preventing the linear movement of the swinging arm (30).

8. Electromagnetic actuator according to any of claims 4 to 7, wherein the coupling means (50) are fixed to the electromagnet (10).

9. Electromagnetic actuator according to claim 8, wherein the coupling means (50) comprise side plates (56, 57) comprising elastic flanges (58), said elastic flanges (58) being clipped onto side edges (14) of the electromagnet (10) when the swinging arm (30) is coupled with the electromagnet (10), laterally holding said swinging arm (30).

10. Electromagnetic actuator according to any of the preceding claims, wherein the swinging arm (30) comprises at the first end (31) an opening (37), and the closure member (40) comprises a perimetral groove (41), the edge of the opening (37) being introduced in the groove (41) when the closure member (40) is coupled to the swinging arm (30), said coupling having play so that the closure member (40) can pivot freely.

11. Electromagnetic actuator according to any of the preceding claims, comprising a spring (60) which is supported at a first end (61) in the closure member (40), the spring (60) being configured for being supported at a second end (62) on a surface of the gas shut-off valve (200), the spring (60) being compressed when the swinging arm (30) swings to the open position, the closure member (40) preferably comprising a washer (80) in which the first end (61) of the spring (60) is supported, said washer (80) being fixed without play in a housing (44) of the closure member (40).

12. Electromagnetic actuator according to any of the preceding claims, wherein the electromagnet (10) comprises a core (11) attached to a permanent magnet (15), with a magnetic field being produced in said permanent magnet (15) when a current pulse is supplied to the electromagnet (10), the magnetic field of the permanent magnet (15) attracting the swinging arm (30) and keeping it in a stable open position, and the swinging arm (30) swinging to a stable closed position when a current pulse in the opposite direction is supplied to the electromagnet (10).

13. Electromagnetic actuator according to claim 12, wherein the permanent magnet (15) is an AINiCo magnet or a rare earth magnet, said permanent magnet (15) being arranged at one end of the core (11), with the swinging arm (30) being supported on the permanent magnet (15) when the swinging arm (30) is in the open position.

14. Gas shut-off valve comprising a valve body (220) comprising at least one gas inlet (221), at least one gas outlet (222), at least one gas passage opening (210) for communicating the inlet (221) with the outlet (222), and a printed circuit board (70), **characterized in that** it comprises at least one electromagnetic actuator (100) according to any of the preceding claims, the electromagnetic actuator (100) being fixed to the printed circuit board (70).

15. Gas shut-off valve according to claim 14, wherein the printed circuit board (70) is removably arranged in the valve body (220) forming a closure wall, the printed circuit board (70) comprising an embedded area (71) in which the electromagnet (10) of the electromagnetic actuator (100) is fixed, at least one electric connection area (72) which is accessible from the outside of the valve (200), and connection means (73, 74; 75, 76, 77) extending in the printed circuit board (70) from the connection area (72), the electromagnet (10) comprising a reel (12) which is inserted into the core (11), with the coil (13) being supported on the reel (12), the reel (12) comprising inserted therein connection pins (16) connected to the ends of the coil (13) and to the connection means (73, 74; 75, 76, 77), and fixing pins (17) fixed to the embedded area (71) of the printed circuit board (70), the printed circuit (70) preferably comprising electronic components (110) connected to the connection means (73, 74; 75, 76, 77), with the electromagnet (10) and the electronic components (110) being fixed to the printed circuit board (70), giving said electromagnet (10) and said electronic components (110) surface mount device SMD treatment.
